# FASCICULE DE BREVET EUROPEEN

(11) **EP 0 846 636 B1**
(45) Date de publication et mention de la délivrance du brevet: **12.01.2000**
(21) Numéro de dépôt: 97402705.4
(22) Date de dépôt: 13.11.1997
(51) Int. Cl.: B65G 1/04

(54) **Magasin de stockage et de distribution**
Magazin zum Lagern und Verteilen
Warehouse for storing and distributing

(30) Priorité: 05.12.1996 FR 9614933
(43) Date de publication de la demande: 10.06.1998
(73) Titulaire: GEC ALSTHOM SYSTEMES ET SERVICES SA, 75116 Paris (FR)
(72) Inventeur: Gernez, Alain, 45100 Orléans (FR)
(74) Mandataire: Gosse, Michel

(56) Documents cités:
- FR-A- 2 207 841
- FR-A- 2 617 145

## Description

La présente invention conceme un magasin de stockage et de distribution d'objets (voir par exemple FR-A-2 617 145).

En particulier, l'invention s'applique au stockage automatique de multiples références d'objets, chaque objet étant accessible individuellement. Elle vise en outre à obtenir une grande compacité de stockage, tout en ayant une bonne accessibilité pour un remplissage manuel des éléments de stockage du magasin.

L'invention a ainsi pour objet un magasin de stockage et de distribution d'objets, le magasin ayant une structure générale parallélépipédique de section à quatre angles droits et comportant une série de n couples de glissières horizontales, régulièrement espacées verticalement, permettant l'introduction et le retrait, par coulissement horizontal, de plateaux de stockage desdits objets sur au moins deux colonnes se faisant face, séparées par un volume de manutentionnement occupé par un dispositif introducteur-extracteur de plateaux dans les glissières, lié à un élévateur, caractérisé en ce que l'une des colonnes comporte une portion verticale exempte desdites glissières, appelée volume de travail, dans lequel est située une poutre horizontale, perpendiculaire à la direction d'introduction et d'extraction des plateaux de leurs glissières, ladite poutre portant un chariot mobile le long de la poutre et le chariot portant un bras vertical situé dans ledit volume de manutentionnement, déplaçable selon son axe vertical et équipé à son extrémité inférieure d'un organe préhenseur desdits objets, une base de livraison étant située à au moins l'une des extrémités de ladite poutre, dans laquelle pénètre la poutre et où peut accéder le bras vertical avec son organe préhenseur, les plateaux étant équipés de moyens pour le positionnement précis de chaque objet déposé.

D'autres caractéristiques de la présente invention ressortiront de la description d'un exemple de mise en oeuvre de l'invention faite ci-après en référence au dessin annexé dans lequel :
La figure 1 est une vue extérieure en perspective d'un magasin de stockage selon l'invention.
La figure 2 est une vue en perspective, simplifiée, montrant la structure générale interne d'un magasin selon la figure 1.
La figure 3 montre le magasin vue de face avec l'élévateur au niveau où s'effectue les manipulations des objets par l'organe préhenseur et avec un plateau en position où un objet peut être pris ou déposé en un emplacement précis du plateau.
La figure 4 est une vue de gauche de la figure 3 montrant le bras vertical en position haute et dans trois positions longitudinales le long de la poutre horizontale : deux positions extrêmes, en traits interrompus, et une position intermédiaire, en traits continus.
La figure 5 est une vue de dessus de la figure 3 avec un plateau en position de prise ou de dépôt d'objets comme on le voit sur cette figure 3.
La figure 6 est également une vue de dessus mais avec le bras vertical au droit de la base de prise et de livraison permettant le déplacement vertical de l'élévateur. Sur cette vue on voit d'ailleurs un plateau au centre de l'élévateur, en position pour un mouvement vertical.
La figure 7 est une vue en perspective d'un plateau.
Les figures 8 et 9 sont deux vues illustrant le positionnement d'un objet sur un plateau.
Les figures 10 et 11 montrent en vue de face et de dessus l'élévateur et l'extracteur associé.
Les figures 12A à 12D sont des schémas illustrant une séquence d'extraction d'un plateau et de mise en place en position permettant une extraction ou une dépose d'un objet par l'organe préhenseur.
La figure 13 est une vue en perspective, simplifiée, montrant la structure générale interne d'un magasin selon une variante dans laquelle il y a trois colonnes de stockage de plateaux dont deux colonnes juxtaposées dites en double profondeur.
Les figures 14A et 14B sont deux schémas illustrant le mode d'attelage de plateaux dans un magasin selon la figure 13 utilisant la double profondeur.
Les figures 15A à 15F sont des schémas illustrant une séquence d'extraction d'un plateau et de mise en position permettant une prise ou une dépose d'un objet, dans le cas d'un magasin selon la figure 13 utilisant la double profondeur.
Les figures 16 et 17 montrent en vue de face et de dessus un organe préhenseur.

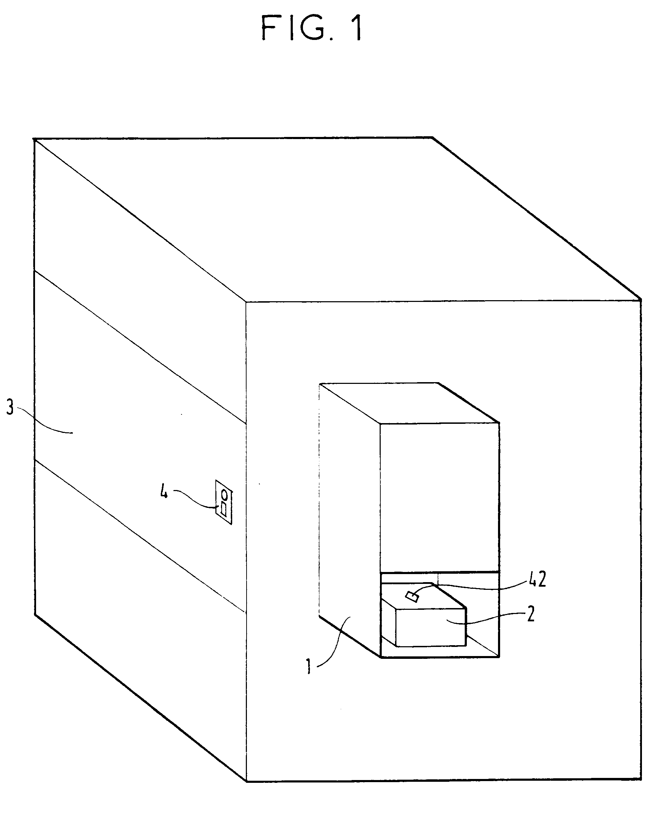

Ainsi, la figure 1 est une vue extérieure en perspective d'un magasin de stockage et de distribution selon l'invention. Ce magasin est entièrement capoté comme on le voit sur la figure, il est de forme générale parallélépipédique et comporte une base 1 de livraison à l'extérieur de ce volume général. La base de livraison est montrée ouverte avec un objet 2 situé à l'intérieur prêt à être prélevé par l'opérateur. Le magasin est entièrement automatique et comporte donc une console pour l'affichage des produits offerts et effectuer sa commande mais ceci ne fait pas partie de l'invention et est effectué par un programme de commande classique.

Dans l'exemple décrit, l'objet 2 est emballé et son emballage inclut un moyen de prise coopérant avec un organe préhenseur. Dans la suite du texte, en parlant de l'objet 2, il s'agit de l'objet emballé, donc comportant le moyen de prise coopérant avec l'organe préhenseur.

En 3 on voit une porte d'accès en position fermée, utilisée par les préposés au magasin pour remplir les plateaux du magasin. En 4 est figurée la serrure.

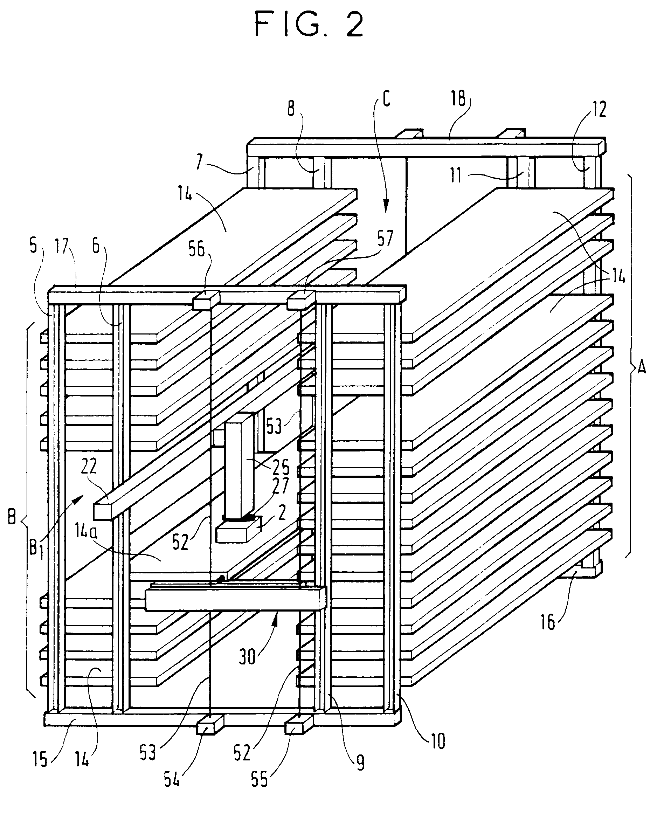

En se reportant maintenant à la figure 2, on voit le magasin sans sa base de livraison 1 et capotage ôté, permettant de voir l'intérieur du magasin. Cette vue en perspective est générale et schématique.

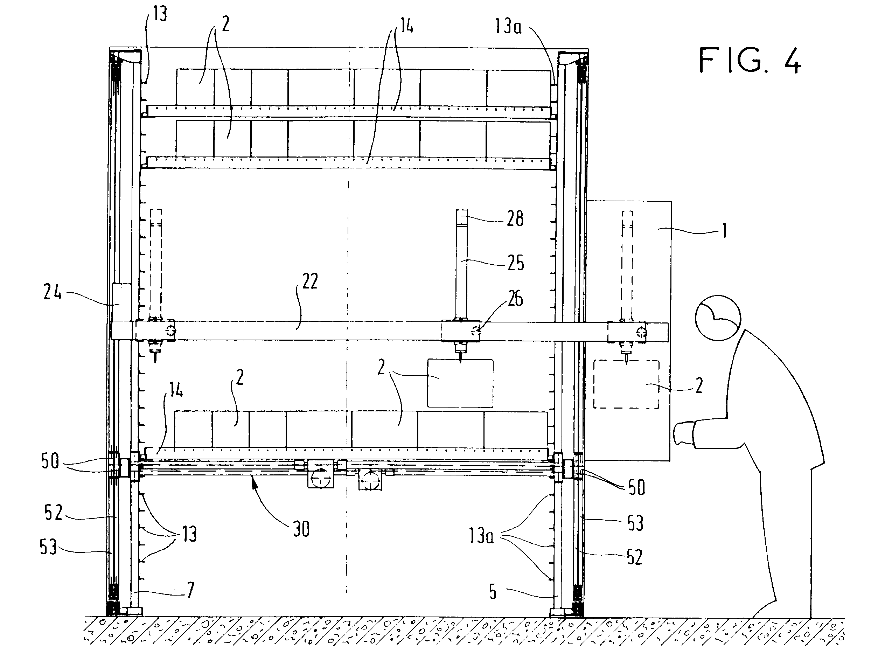

La structure générale est donc parallélépipédique à angles droits, elle comporte des poteaux supports verticaux 5 à 12 à section en U portant une série de n couples de glissières horizontales 13, 13a (visibles figure 4) de façon à pouvoir supporter des plateaux 14.

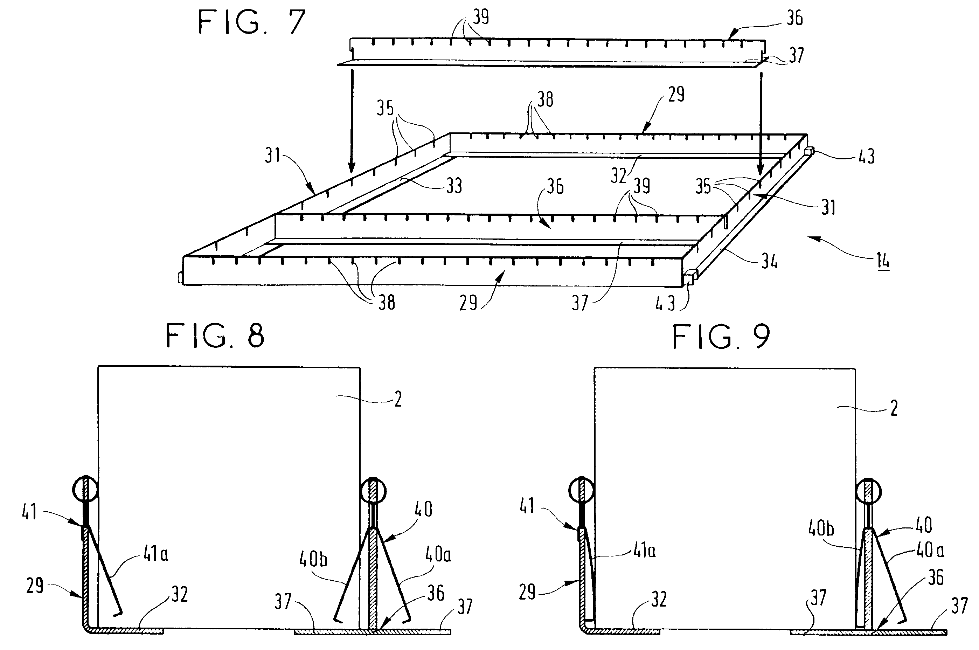

Les plateaux 14 décrits plus loin en référence aux figures 7, 8, 9 sont les éléments de base du magasin dans lesquels sont disposés des objets tels que 2, dans une position précise.

Les glissières 13, 13a permettant de supporter des plateaux 14 sont régulièrement espacées verticalement, mais toutes les glissières ne supportent pas nécessairement un plateau, certaines glissières peuvent être libres. Cela permet d'espacer les plateaux plus ou moins selon la hauteur des objets déposés dans les plateaux.

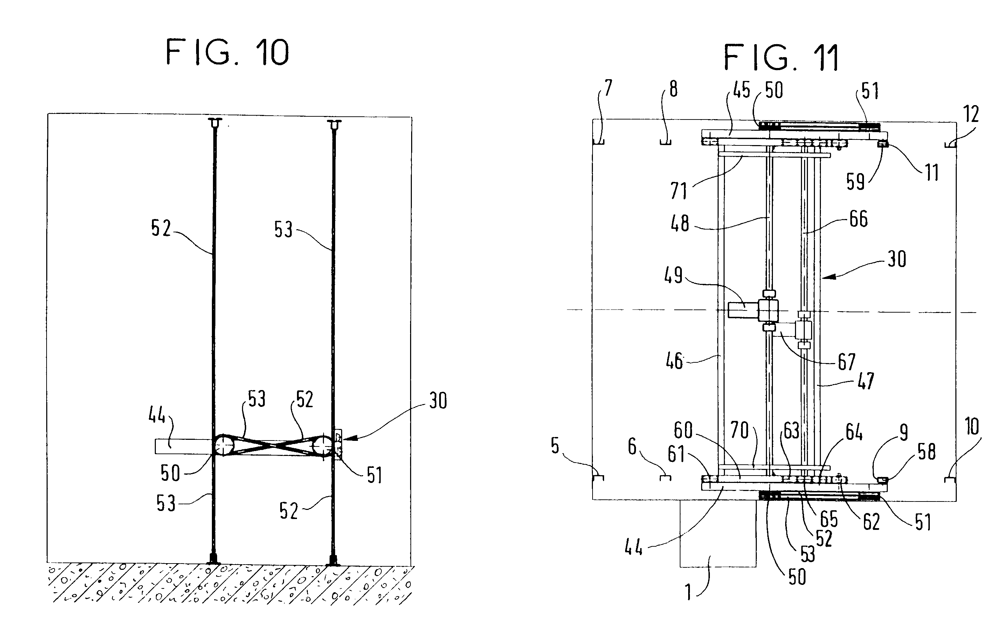

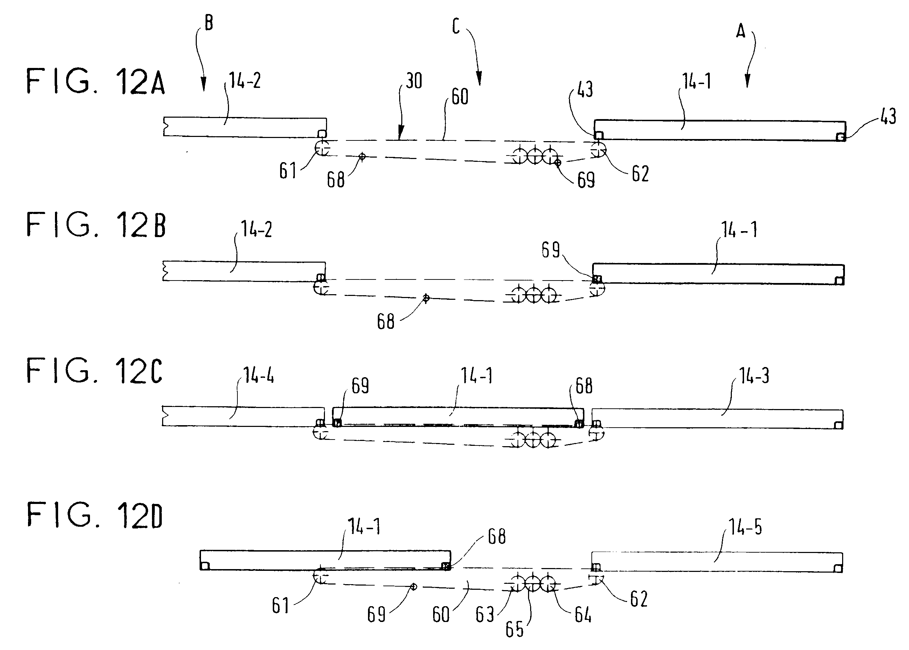

Les plateaux sont situés selon deux colonnes A et B se faisant face et séparés par un volume C de manutentionnement occupé par un dispositif introducteur-extracteur des plateaux lié à un élévateur 30 représenté isolément figures 10 et 11 .

La colonne B comporte une portion verticale appelé volume de travail B₁ exempte de glissières 13, 13a et donc évidemment de plateaux 14. Ce volume de travail B₁ est situé derrière la porte d'accès 3.

Les poteaux supports verticaux 5 à 12 sont liés à deux traverses inférieures 15, 16 et deux traverses supérieures 17 et 18.

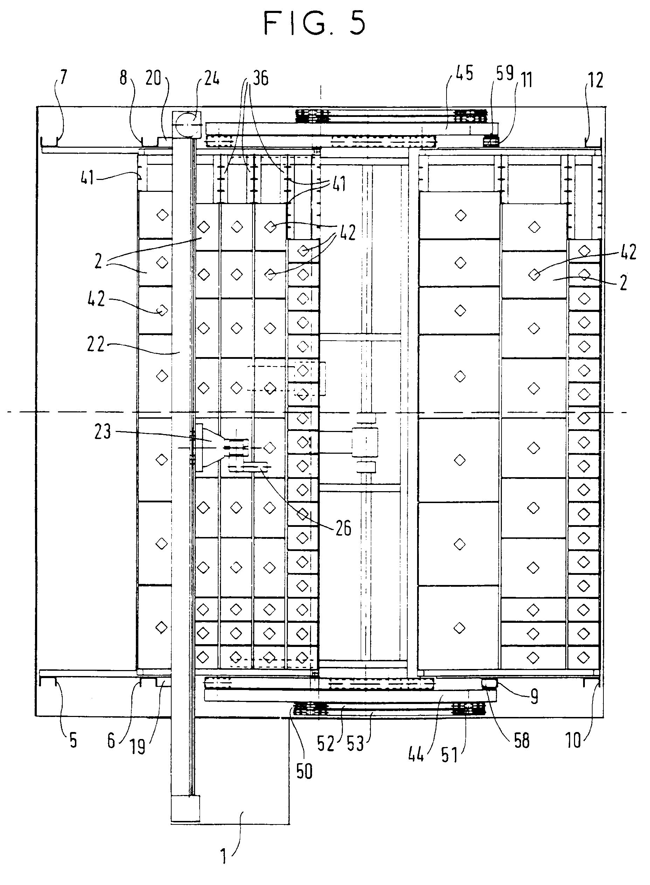

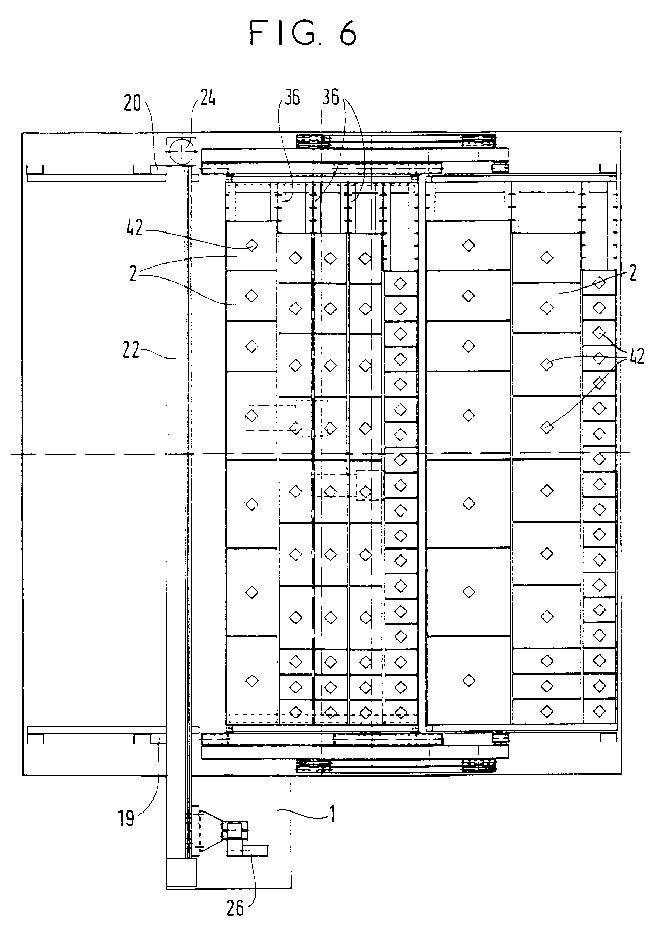

Dans le volume de travail B₁, accrochée aux poteaux supports 6 et 8 par des consoles 19 et 20 (figures 5 et 6) est située une poutre horizontale 22 supportant un chariot 23 pouvant se déplacer le long de la poutre 22, laquelle, comme on le voit figures 2, 4, 5 et 6, sort du volume parallélépipédique du magasin pour pénétrer dans la base de livraison 1. Le chariot 23 est entraîné le long de la poutre par un moteur 24 (figures 4, 5, 6) agissant sur une courroie crantée non représentée.

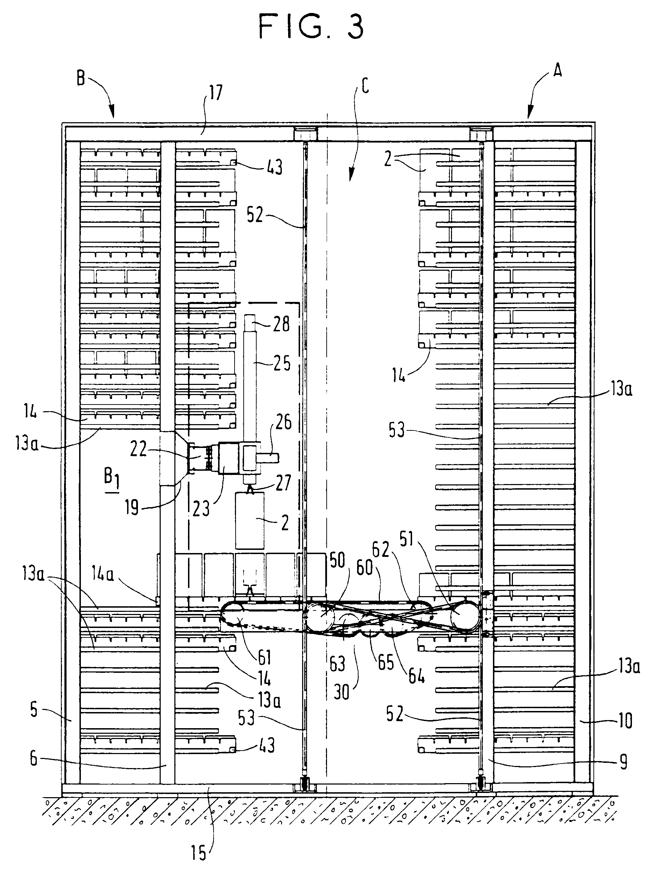

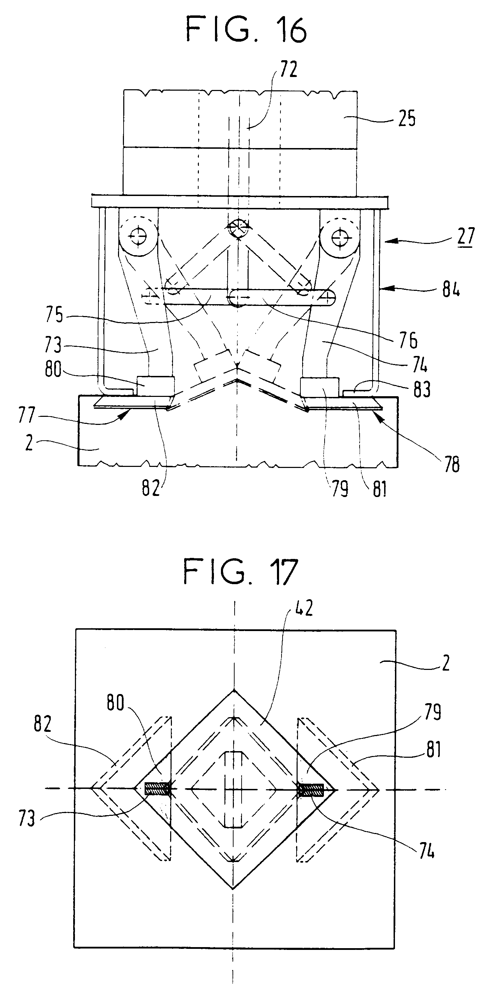

Le chariot 23 porte lui-même un bras vertical 25 se mouvant verticalement selon son axe, guidé par le chariot 23. Le mouvement est assuré par un moteur 26 (figures 3, 4, 5, 6) et une courroie crantée, non représentée, fixée aux deux extrémités du bras vertical 25. A son extrémité inférieure, le bras vertical 25 est équipé d'un organe préhenseur 27 des objets 2, actionné par un moteur 28 (figures 3, 4). Un organe préhenseur 27 particulier est décrit en référence aux figures 16 et 17. Comme on le voit bien figure 3, le bras vertical 25 est situé dans le volume de manutention C constituant une cage de circulation pour l'élévateur 30 de telle sorte que celui-ci ne peut se mouvoir librement dans ce volume que lorsque le chariot 23 avec le bras vertical 25 et l'organe de préhension 27, est situé en extrémité de la poutre horizontale 22, dans la base de livraison 1, c'est-à-dire hors du volume parallélépipédique du magasin.

Sur la figure 2, comme sur la figure 3, l'élévateur 30 est situé au niveau où s'effectue les manipulations des objets 2 par l'organe extracteur 27. Cette manipulation s'effectue à partir d'un plateau 14, le plateau référencé 14a en l'occurrence, introduit dans le dernier couple de glissières 13, 13a laissé normalement libre, situé dans la colonne B juste avant l'espace B₁ exempt de glissières. A ce niveau, le dispositif introducteur-extracteur, lié à l'élévateur 30, place le plateau 14a en position plus ou moins rentré dans les glissières selon l'emplacement transversal du plateau où un objet doit être placé ou prélevé, sachant que dans le sens longitudinal du plateau c'est le bras vertical 25 qui se déplace, grâce au chariot 23, le long de la poutre 22.

En se référant maintenant aux figures 7, 8 et 9 on va décrire un plateau 14.

La figure 7 montre un plateau 14 en perspective. Il se compose d'un simple cadre à quatre côtés : deux côtés longitudinaux 29 et deux côtés transversaux 31 portant des rebords internes, respectivement 32 et 33. Lorsqu'un plateau 14 est placé dans le magasin, sur un couple de glissières 13, 13a, il est tourné de telle façon que ses côtés longitudinaux 29 sont parallèles à la poutre 22. Il repose donc sur les glissières 13, 13a par ses côtés transversaux 31 et plus précisément par un rebord extérieur 34 de ces côtés.

Les côtés transversaux 31 comportent des encoches 35 régulièrement espacées qui ont pour but de permettre de placer des longerons séparateurs 36 amovibles. Ces longerons séparateurs 36 portent de chaque côté un rebord support 37.

Ainsi, pour un plateau 14 déterminé, on place plus ou moins de longerons séparateurs 26 selon la largeur des objets à placer. On aperçoit ces longerons séparateurs 36 sur les vues de dessus 5 et 6.

En outre, afin de séparer les objets longitudinalement et de les positionner de façon précise, les côtés longitudinaux 29, ainsi que les longerons séparateurs 36 comportent également des encoches, respectivement 38 et 39, régulièrement espacées destinées à être équipées, chacune, d'agrafes élastiques 40 et 41. Ces agrafes, disposées dans chaque encoche, ne sont pas placées sur le plateau représenté figure 7. On les voit seulement sur les vues partielles en coupe 8 et 9.

Les agrafes élastiques 40 sont symétriques, à deux jambes 40a et 40b, et sont placées dans les encoches 39 des longerons séparateurs 36 et les agrafes élastiques 41 sont dissymétriques, à une seule jambe 41a, et sont placées dans les encoches 38 des côtés longitudinaux 29.

Ainsi, comme on le voit sur la figure 8, les jambes 41a et 40b des agrafes 41 et 40 servent de butée longitudinale pour le colis 2. Si le colis 2 a une longueur supérieure à la distance séparant longitudinalement deux agrafes, son encombrement en largeur vient escamoter les jambes des agrafes intermédiaires, c'est ce que montre la figure 9 où le colis 2 escamote les jambes 41a et 40b des agrafes 41 et 40. Cette combinaison de longerons séparateurs 36 et d'agrafes élastiques à jambes escamotables 40 et 41 permet le positionnement précis des objets sur le plateau, indispensable pour la gestion du magasin et elle permet également une très grande variété de dimensionnement des objets.

Les objets sont préemballés et comportent un moyen coopérant avec l'organe de préhension 27. Dans l'exemple décrit, le moyen coopérant avec l'organe préhenseur 27, décrit plus loin en référence aux figures 16 et 17, est un simple trou carré 42 effectué dans la partie supérieure de l'emballage des objets 2 et bien visible sur les vues de dessus 5 et 6.

Le plateau 14, comme on le voit figure 7, comporte en outre, pour leur mise en place et pour leur extraction des glissières 13, 13a par le dispositif introducteur-extracteur lié à l'élévateur 30, des organes coopérants avec le dispositif introducteur-extracteur. Il s'agit en l'occurrence, d'alvéoles 43 situés à l'extrémité de chaque côté transversal 31 au niveau du rebord extérieur 34.

On va maintenant décrire l'élévateur 30 avec son dispositif introducteur-extracteur associé en se référant aux figures 10 et 11.

La figure 10 est vue en élévation et la figure 11 en vue de dessus.

L'élévateur 30 comprend un châssis comportant deux traverses 44 et 45 réunies par deux longerons 46 et 47. Il supporte deux supports 70, 71 pour les plateaux 14. Le châssis porte un arbre moteur 48 entraîné en rotation par un moteur 49. A chaque extrémité de l'arbre 48, à l'extérieur des traverses 44 et 45, est situé un double-pignon menant 50. Les traverses 44 et 45 portent en outre, chacune, un double-pignon mené 51.

Les doubles-pignons menant et mené 50 et 51 situés du côté de la traverse 44 coopèrent avec deux chaînes 52 et 53 qui se croisent au niveau de l'élévateur, comme le montre la figure 10, (le croisement s'effectue sans difficulté puisque les pignons 50 et 51 sont des doubles-pignons, les chaînes sont donc dans des plans distincts comme on le voit figure 4) et sont fixés à leurs extrémités au niveau de la traverse inférieure 15 de la structure et de la traverse supérieure 17 par des organes de fixation 54 (figure 2) liés à ces traverses.

On a exactement la même disposition de chaînes de l'autre côté de l'élévateur 30, associé à la traverse 45.

Ce système d'élévateur monté sur chaînes croisées assure un mouvement vertical de l'élévateur garantissant l'horizontabilité de l'élévateur, avec un encombrement vertical minimal. Le guidage vertical de l'élévateur, lors de ses déplacements, est assuré par deux galets 58 et 59 fixés respectivement à l'avant des traverses 44 et 45 et coopérant respectivement avec les poteaux supports verticaux 9 et 11 à section en U.

A l'élévateur 30 est associé un dispositif introducteur-extracteur des plateaux 14.

Ce dispositif est schématisé sur les figures 12A à 12D illustrant une séquence d'extraction d'un plateau et de mise en place sur les glissières 13-13a de la colonne B précèdent juste l'espace libre B₁, là où l'organe préhenseur 27 peut prendre ou déposer un objet 2 sur un plateau 14. En dehors de ces figures 12A à 12D, le dispositif se voit également sur les figures 3 et 11.

Le dispositif comprend deux chaînes 60 : une de chaque côté du châssis de l'élévateur 30, disposées respectivement du côté interne de la traverse 44 et de la traverse 45. Chaque chaîne 60 passe sur des pignons 61, 62, 63, 64 et 65. Les pignons 65 des deux chaînes sont moteurs et reliés l'un à l'autre par un arbre commun 66 entraîné par un moteur 67.

Chaque chaîne 60 porte deux manetons d'entraînement 68 et 69. Les manetons 68 et 69 sont déportés latéralement, c'est-à-dire qu'ils sont dirigés vers l'intérieur du châssis de façon à pouvoir pénétrer latéralement dans les alvéoles 43 des plateaux 14 et de façon à permettre par ailleurs le libre déplacement vertical de l'élévateur lorsque les deux manetons 68 et 69 sont en position de repos comme sur la figure 12A.

Pour permettre l'introduction latérale des manetons dans un alvéole 43 d'un plateau 14, il est nécessaire évidemment que les plateaux avec leur alvéole 43 dépasse la longueur des glissières supports 13, 13a des plateaux, comme on le voit bien figure 3.

On va maintenant décrire une séquence d'extraction d'un plateau 14-1 de la colonne A pour l'amener en position où un objet peut être pris ou déposé sur ce plateau par l'organe préhenseur 27. Pour cela il faut amener ce plateau sur les dernières glissières 13, 13a, côté colonne B, juste avant l'espace libre B₁, et, sur ces glissières, dans une position plus ou moins enfoncée selon l'emplacement, dans le sens transversal du plateau, où cette opération doit avoir lieu.

Ainsi, figure 12A, l'élévateur, avec son dispositif introducteur-extracteur, est amené juste sous le plateau 14-1 à extraire.

Pour venir dans cette position, les manetons 68, 69 sont dans la position représentée, permettant ainsi le libre passage des pignons 61, 62 devant les colonnes A et B de plateaux (ou derrière les colonnes pour les pignons 61 et 62 de la chaîne arrière).

Figure 12B, on a avancé les chaînes 60 de façon à ce que les deux manetons 69 viennent se placer sous les alvéoles 43 puis on a effectué un léger mouvement vertical de l'élévateur de façon à introduire les manetons dans les alvéoles.

Figure 12C, le maneton 69 a tiré le plateau 14-1 sur l'élévateur jusqu'à l'introduction du deuxième maneton 68 dans l'alvéole arrière du plateau 14-1. L'élévateur peut alors se mouvoir verticalement. Il est représenté, dans sa course verticale entre deux plateaux 14-3 et 14-4.

L'alvéole arrière des plateaux est, bien entendu, dimensionné suffisamment par rapport à la dimension du maneton 68 et à la cinématique d'introduction de ce maneton dans l'alvéole arrière 43.

Enfin, lorsque l'élévateur est arrivé au niveau de l'espace B₁, le maneton 68 pousse le plateau 14-1 de façon à l'amener dans la position adéquate compte-tenu de l'emplacement du plateau où un objet est à pendre ou à déposer. C'est la position représentée figure 12D.

Les figures 16 et 17 montrent, selon deux vues, un organe préhenseur 27 particulier coopérant avec un orifice de section carrée de l'emballage des objets. Cet organe préhenseur 27 est situé à l'extrémité inférieure du bras vertical 25 et il est commandé par le moteur 28 agissant sur une tige de manoeuvre 72 pour lui donner un mouvement vertical ascendant ou descendant.

L'organe préhenseur 27 est composé de deux leviers 73 et 74 actionnés par deux bielles 75 et 76 reliées à l'extrémité inférieure de la tige de manoeuvre 72. A leur extrémité inférieure, chaque levier 73, 74 comporte un mors, respectivement 77 et 78, composé d'un plot de section triangulaire isocèle-rectangle 79, 80 et, d'une semelle épaisse 81, 82, comme on le voit figure 16, et dont la forme est également triangulaire isocèle-rectangle comme on le voit sur la figure 17 en vue de dessus, avec les bords chanfreinés.

L'organe préhenseur pénètre dans l'orifice 42, en position rétractée (position en traits interrompus figure 16) puis la tige de manoeuvre 72 est descendue ce qui écarte les deux leviers 73 et 74 de telle sorte que les bords de l'orifice 42 sont pris en sandwich entre les semelles 81, 82 des mors 77, 78 et la paroi inférieure 83 d'un carter-socle 84 enfermant le mécanisme. La paroi inférieure 84 comportant évidemment un trou pour le passage des semelles 81, 82.

Sur la figure 16, l'organe préhenseur 27 est représenté dans sa position déployée en traits continus.

La figure 17 montre le dispositif en vue de dessus en coupant l'extrémité inférieure des leviers 73, 74 et en passant ensuite entre la paroi 83 et la paroi supérieure de l'objet 2.

Ainsi, lors du déploiement des leviers 73, 74, les faces verticales des plots 79, 80, de section triangulaire viennent en contact avec les bords du trou 42 et permettent de placer l'objet dans une bonne position s'il ne l'était pas.

L'introduction des objets dans le magasin peut être faite par un préposé en ouvrant la porte arrière 3 (figure 1) et venant charger un plateau placé en position inférieure de l'espace B₁, mais les objets peuvent également être déposés un à un, par un préposé, dans la base 1, par exemple sur un repérage, et l'organe préhenseur 27 vient alors chercher l'objet, en le repositionnant dans une position correcte s'il ne l'était pas, grâce à l'interaction desdites faces verticales des plots 79, 80 avec les bords du trou 42, et le placer dans un endroit libre d'un plateau, préalablement positionné à la partie inférieure de l'espace B₁. Cette dernière procédure n'est utilisée que lorsqu'il n'y a que peu d'objets à placer et dans des plateaux distincts.

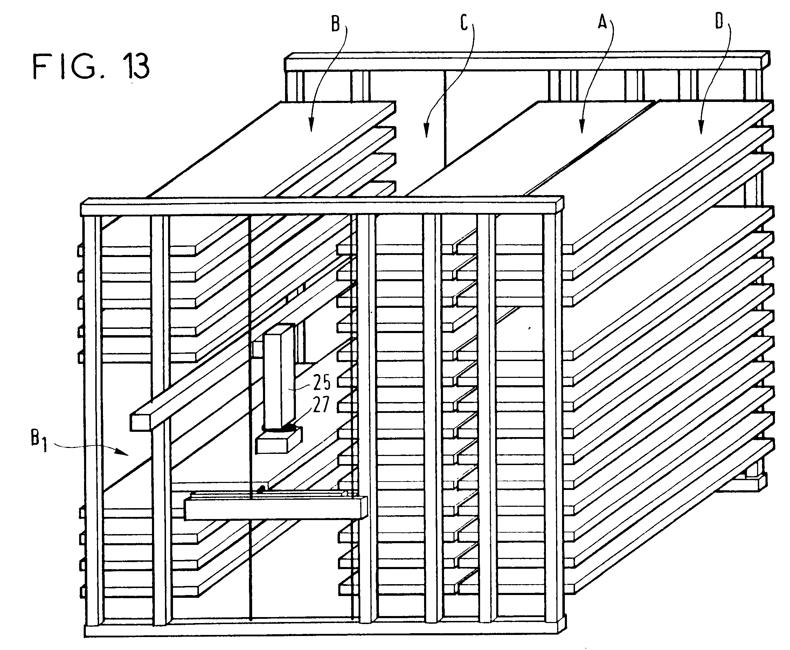

La figure 13 est une variante de l'invention dans une vue semblable à celle de la figure 1 et dont la seule différence consiste en ce qu'il y a trois colonnes de stockage de plateaux : A, B et D. Les deux colonnes A et D sont juxtaposées et dites en double profondeur. Cette disposition est intéressante car elle augmente sensiblement la densité de stockage.

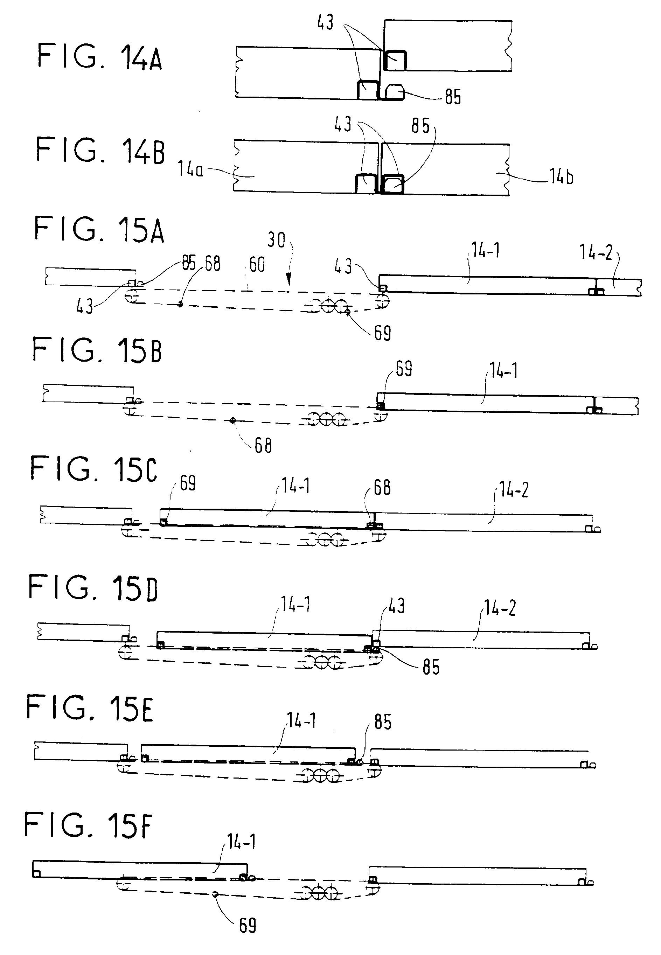

Les plateaux possèdent alors à l'arrière, des crochets d'attelage 85 juste derrière l'alvéole 43 comme montré figure 14A. Ainsi, lorsque, figure 14B, les deux crochets 85 d'attelage du plateau 14a sont engagés dans les deux alvéoles 43 du plateau arrière 14b, la traction du premier plateau 14a par le dispositif introducteur-extracteur provoque l'avancée du second plateau 14b.

Les figures 15A à 15F donnent une séquence d'extraction d'un plateau de la colonne A et de mise en position à l'extrémité inférieure de l'espace B₁ pour une manipulation d'objets.

En figure 15A positionnement de l'élévateur 30 sous le plateau 14-1 à extraire, les manetons 68 et 69 sont dans la position permettant les mouvements verticaux de l'élévateur dans la cage C sans interférer avec les alvéoles 43.

En figure 15B, après amenée du maneton 69 sous l'alvéole 43 on effectue un léger mouvement vertical ascendant de l'élévateur de façon à engager le maneton 69 dans l'alvéole 43.

En figure 15C transfert du plateau 14-1 sur l'élévateur jusqu'à introduction du second maneton 68 dans l'alvéole arrière 43 du plateau 14-1 et traction du second plateau 14-2 en position première profondeur.

Figure 15D petit mouvement vertical descendant de l'élévateur de façon à dégager le crochet 85 du premier plateau 14-1 de l'alvéole 43 du second plateau 14-2.

Figure 15E petite avance du premier plateau 14-1 sur l'élévateur pour l'amener en position permettant une libre circulation verticale.

Figure 15F poussée du plateau 14-1 dans les demières glissières 13-13d avant l'espace B₁ de façon à placer l'axe de l'objet à prélever du plateau 14-1 dans l'axe de l'organe préhenseur 27.

Dans l'exemple décrit, l'organe préhenseur coopère avec un trou 42 effectué à la partie supérieure de l'emballage de l'objet 2.

L'objet 2, emballé ou non emballé, pourrait être placé dans un panier comportant un moyen de préhension tel qu'une anse et l'organe préhenseur 27 serait alors adapté pour coopérer avec un tel moyen.

## Revendications

1. Magasin de stockage et de distribution d'objets (2), le magasin ayant une structure générale parallélépipédique de section à quatre angles droits comportant une série de n couples de glissières (13, 13a) horizontales, régulièrement espacées verticalement, permettant l'introduction et le retrait, par coulissement horizontal, de plateaux de stockage (14) desdits objets (2) sur au moins deux colonnes (A, B) se faisant face, séparées par un volume de manutentionnement (C) occupé par un dispositif introducteur-extracteur de plateaux dans les glissières, lié à un élévateur (30), caractérisé en ce que l'une des colonnes (B) comporte une portion verticale (B₁) exempte desdites glissières, appelé volume de travail, dans lequel est située une poutre horizontale (22), perpendiculaire à la direction d'introduction et d'extraction des plateaux de leurs glissières, ladite poutre portant un chariot (23) mobile le long de la poutre et le chariot portant un bras vertical (25) situé dans ledit volume de manutentionnement (C), déplaçable selon son axe vertical et équipé à son extrémité inférieure d'un organe préhenseur (27) desdits objets (2), une base de livraison (1) étant située à au moins l'une des extrémités de ladite poutre (22), à l'extérieur dudit volume parallélépipédique, dans laquelle pénètre la poutre et où peut accéder le bras vertical (25) avec son organe préhenseur (27), les plateaux (14) étant équipés de moyens (36, 40, 41) pour le positionnement précis de chaque objet déposé.

2. Magasin de stockage selon la revendication 1, caractérisé en ce qu'un plateau (14) comprend un cadre comprenant deux côtés longitudinaux (29) et deux côtés transversaux (31) et en ce qu'il comprend des longerons séparateurs (36) amovibles, déplaçables, disposés parallèlement aux côtés longitudinaux (29).

3. Magasin selon la revendication 2, caractérisé en ce que lesdits côtés longitudinaux (29) sont placés dans le magasin, dans une direction parallèle à ladite poutre horizontale (22).

4. Magasin selon l'une des revendications 2 ou 3 caractérisé en ce que lesdits côtés longitudinaux (29) des plateaux (14) ainsi que lesdits longerons séparateurs (36) comportent respectivement des encoches (38, 39) régulièrement espacées recevant chacune une agrafe élastique.

5. Magasin selon la revendication 4, caractérisé en ce que les agrafes élastiques (41) disposées sur les côtés longitudinaux (29) sont asymétriques à une seule jambe escamotable (41a), et en ce que les agrafes élastiques (40) disposées sur les longerons séparateurs (36) sont symétriques, à deux jambes escamotables (40a, 40b), disposés à cheval sur un longeron (36).

6. Magasin selon la revendication 1, caractérisé en ce que ledit élévateur (30) comprend un châssis (44 à 47) portant un arbre moteur (48) dont chaque extrémité porte un double-pignon menant (50), chaque double-pignon menant (50) étant associé à un double-pignon mené (51) et un couple de double-pignon menant (50) et double-pignon mené (51) coopérant avec deux chaînes (52, 53) se croisant au niveau des doubles-pignons menant (50) et mené (51), les extrémités de chaque chaîne étant fixées à la structure à son extrémité supérieure et inférieure.

7. Magasin selon l'une des revendications précédentes, caractérisé en ce que le dispositif introducteur-extracteur lié audit élévateur comporte, de chaque côté du châssis de l'élévateur une chaîne (60) passant sur des pignons (61 à 65) dont un pignon moteur (65), ladite chaîne (60) étant équipée de deux manetons d'entraînement (68, 69) déportés latéralement et pouvant coopérer respectivement avec deux alvéoles d'entraînement (43) des plateaux situés l'un à l'avant et l'autre à l'arrière de chaque plateau.

8. Magasin selon l'une des revendications précédentes caractérisé en ce qu'il comprend trois colonnes (A, B, D) de stockage de plateaux dont deux colonnes (A, D) sont juxtaposées en double-profondeur.

9. Magasin selon la revendication 8, caractérisé en ce que chaque plateau 14 comporte à l'arrière, et de chaque côté, un crochet d'attelage (85) destiné à coopérer avec ledit alvéole (43) avant d'un plateau en seconde profondeur situé dans la colonne arrière (D).

10. Magasin selon l'une des revendications précédentes, caractérisé en ce que ledit organe préhenseur (27) comprend deux leviers articulés (73, 74) comportant chacun à son extrémité inférieure un mors (77, 78) comprenant un plot (79, 80) et une semelle (81, 82), ledit plot ayant une section triangulaire dont les faces, lors du déploiement des leviers pour la prise d'un objet, après introduction de l'organe préhenseur (27) dans un trou (42) de la partie supérieure de l'emballage de l'objet (2), viennent en position verticale en coopérant avec les bords dudit trou assurant une bonne position de l'emballage de l'objet.

## Claims

1. A magazine for storing and dispensing articles (2), the magazine being generally in the form of a rectangular parallelepiped having a series of n pairs of horizontal slides (13, 13a) that are regularly spaced apart vertically, enabling storage trays (14) for said articles (2) to be inserted and withdrawn by sliding horizontally over at least two facing columns (A, B) that are spaced apart by a handling volume (C) itself occupied by a device for inserting and extracting the trays onto and away from the slides, which device is associated with an elevator (30), the magazine being characterized in that one of the columns (B) has a vertical portion (B₁) that is free of said slides, that is referred to as the "working" volume, and in which there is situated a horizontal beam (22) extending perpendicularly to the direction in which the trays are inserted on and extracted from their slides, said beam carrying a carriage (23) that is movable along the beam, and the carriage carrying a vertical arm (25) situated in said handling volume (C) and displaceable along its vertical axis, and fitted at its bottom end with a grasping member (27) for grasping said articles (2), a delivery base (1) being situated at at least one of the ends of said beam (22) outside said rectangular parallelepiped volume, into which base the beam penetrates and where it is possible to access the vertical arm (25) with its grasping member (27), the trays (14) being fitted with means (36, 40, 41) for accurately positioning each article that is put down therein.

2. A storage magazine according to claim 1, characterized in that a tray (14) comprises a frame having two longitudinal sides (29) and two transverse sides (31), and in that it includes removable and displaceable longitudinal separators (36) extending parallel to the longitudinal sides (29).

3. A magazine according to claim 2, characterized in that said longitudinal sides (29) are placed in the magazine, in a direction parallel to said horizontal beam (22).

4. A magazine according to claim 2 or 3, characterized in that said longitudinal sides (29) of the trays (14) and said longitudinal separators (36) have respective notches (38, 39) that are regularly spaced apart and each of which receives a spring clip.

5. A magazine according to claim 4, characterized in that the spring clip (41) disposed on the longitudinal sides (29) are asymmetrical, having a single retractable leg (41a), and in that the spring clips (40) placed on the longitudinal separators (36) are symmetrical, having two retractable legs (40a, 40b) disposed astride the longitudinal separator (36).

6. A magazine according to claim 1, characterized in that said elevator (30) comprises a frame (44 to 47) carrying a drive shaft (48) having a double driving sprocket wheel (50) at each end, each double driving sprocket wheel (50) being associated with a double driven sprocket wheel (51) and each pair comprising a double driving sprocket wheel (50) and double driven sprocket wheel (51) co-operating with two chains (52, 53) that cross at the same level as the driving and driven double sprocket wheels (50, 51), the ends of each chain being fixed to the structure at its top and bottom ends.

7. A magazine according to any preceding claim, characterized in that the inserter-extractor device associated with said elevator comprises, on either side of the elevator frame, a chain (60) passing over sprocket wheels (61 to 65) including a driving sprocket wheel (65), said chain (60) being fitted with two drive pegs (68, 69) that are offset laterally and that are suitable for co-operating respectively with two drive recesses (43) of the trays, one situated at the front and the other situated at the rear of each tray.

8. A magazine according to any preceding claim, characterized in that it comprises three tray storage columns (A, B, D) with two of the columns (A, D) being juxtaposed and in double depth.

9. A magazine according to claim 8, characterized in that each tray (14) includes at its rear, and on both sides, a coupling hook (85) for co-operating with said front recess (43) of a tray in second depth situated in the rear column (D).

10. A magazine according to preceding claim, characterized in that said grasping member (27) comprises two hinged levers (73, 74) each having a jaw (77, 78) at its bottom end, the jaw comprising a pad (79, 80) and a sole plate (81, 82), said pad being of triangular section and having faces which, during deployment of the levers for taking hold of an article and after the grasping member (27) has been inserted into a hole (42) of the top portion of the packaging of the article (2), take up a vertical position in co-operation with the edges of said hole so as to ensure that the packaging of the article is properly positioned.

## Patentansprüche

1. Lager- und Vertriebsmagazin für Objekte (2), wobei das Magazin eine im wesentlichen parallelepipedförmige Struktur hat, mit einem Querschnitt mit vier rechten Winkeln, umfassend eine Reihe von n horizontalen Schienenpaaren (13, 13a), die vertikal gleichmäßig beabstandet sind, die das horizontale Einführen und Herausnehmen von Lagerpaletten (14) der Objekte (2) in zumindest zwei sich gegenüberliegenden Zeilen (A, B) durch horizontales Gleiten ermöglichen, die voneinander durch ein Transportvolumen (C) getrennt sind, welches durch eine Handhabungsvorrichtung für die Lagerpaletten auf den Schienen eingenommen wird, verbunden mit einem Aufzug (30), dadurch gekennzeichnet, daß eine der Zeilen (B) einen vertikalen Bereich (B₁) umfaßt, in dem keine Schienen vorhanden sind, das als Arbeitsvolumen bezeichnet wird, in dem sich ein horizontaler Träger (22) befindet, rechtwinklig zur Einführ- und Herausnahmerichtung der Paletten von ihren Schienen, wobei der Träger einen Wagen (23) trägt, der sich entlang des Trägers bewegen kann und einen vertikalen Arm (25) umfaßt, der in dem Transportvolumen (C) angeordnet ist, der sich entlang einer vertikalen Achse bewegen läßt und an seinem unteren Ende mit einem Greiforgan (27) für die Objekte (2) ausgestattet ist, wobei eine Lieferstation (1) an zumindest einem Ende des Trägers (22) angeordnet ist, außerhalb des parallelepipedischen Volumens, in das der Träger hineinreicht und den vertikalen Arm (25) mit seinem Greiforgan (27) erreicht, wobei die Paletten (14) mit Einrichtungen (36, 40, 41) für die präzise Positionierung eines jeden gespeicherten Objektes versehen sind.

2. Lagermagazin nach Anspruch 1, dadurch gekennzeichnet, daß eine Palette (14) aus einem Rahmen mit zwei Längsseiten (29) und zwei Transversalseiten (31) besteht und dadurch daß sie zwei unbewegliche, versetzbare Separatorträger (36) umfaßt, die parallel zu den Längsseiten angeordnet sind.

3. Magazin nach Anspruch 2, dadurch gekennzeichnet, daß die Längsseiten (29) in dem Magazin angeordnet sind, in einer Richtung parallel zu dem horizontalen Träger (22).

4. Magazin nach einem der Ansprüche 2 oder 3, dadurch gekennzeichnet, daß die Längsseiten (29) der Paletten (14), wie auch die Separatorträger (36) jeweils regelmäßig beabstandete Kerben (38, 39) umfassen, die jeweils eine elastische Klammer aufnehmen.

5. Magazin nach Anspruch 4, dadurch gekennzeichnet, daß die elastischen Klammern (41), die an den Längsseiten (29) angeordnet sind, symmetrisch zu einer versenkbaren Strebe (41a) sind, und dadurch, daß die elastischen Klammern (40), die an den Separatorträgern (36) befestigt sind, symmetrisch zu zwei versenkbaren Streben (40a, 40b) sind, die auf einem Träger (36) sitzen.

6. Magazin nach Anspruch 1, dadurch gekennzeichnet, daß der Aufzug (30) ein Chassis (44 bis 47) hat, daß eine Motorwelle (48) umfaßt, deren beide Enden ein Doppelantriebsritzel (50) tragen, wobei jedes Doppelantriebsritzel (50) mit einem angetriebenen Doppelritzel (51) verbunden ist und eine Paarung von Doppelantriebsritzel (50) und angetriebenem Doppelritzel (51) mit zwei Ketten (52, 53) zusammenwirkt, die sich auf der Höhe des antreibenden (50) und angetriebenen (51) Doppelritzels kreuzen, wobei die Enden einer jeden Kette an dem oberen und unteren Ende der Struktur fixiert sind.

7. Magazin nach einem der vorhergehenden Ansprüche, dadurch gekennzeichnet, daß die mit dem Aufzug verbundene Handhabungsvorrichtung auf jeder Seite des Aufzugchassis eine Kette (60) umfaßt, die über Ritzel (61 und 65) läuft, von denen eines ein Motorritzel (65) ist, wobei die Kette (60) mit zwei Antriebszapfen (68, 69) versehen ist, die seitlich verteilt sind und mit jeweils zwei Antriebsalveolen (43) der Paletten zusammenarbeiten können, von denen eine an der Vorderseite und eine an der Rückseite einer jeden Palette angeordnet ist.

8. Magazin nach einem der vorhergehenden Ansprüche, dadurch gekennzeichnet, daß es drei Zeilen (A, B, D) zur Lagerung der Paletten umfaßt, wobei zwei Zeilen (A, D) benachbart mit doppelter Tiefe angeordnet sind.

9. Magazin nach Anspruch 8, dadurch gekennzeichnet, daß jede Palette (14) auf der Rückseite und an jeder Seite einen Spannhaken (85) aufweist, der der Zusammenarbeit mit der vorderen Alveole (43) einer Palette in zweiter Tiefe, angeordnet in der hinteren Zeile (D) dient.

10. Magazin nach einem der vorhergehenden Ansprüche, dadurch gekennzeichnet, daß das Greiforgan (27) zwei angelenkte Hebel (73, 74) umfaßt, die jeweils an ihrem unteren Ende eine Spannbacke (77, 78) mit einem Klemmblock (79, 80) und einer Sohle (81, 82) aufweisen, wobei der Klemmblock einen dreieckigen Querschnitt hat, dessen Seiten während des Absenkens des Hebels zur Aufnahme eines Objektes, nach dem Einführen des Greiforganes (27) in eine Öffnung (42) des oberen Bereiches der Verpackung des Objektes (2), in eine vertikale Position kommt, durch das Zusammenwirken mit den Rändern der Öffnung, wodurch eine gute Positionierung der Verpackung des Objektes sichergestellt wird.
